# EUROPEAN PATENT APPLICATION

(11) **EP 2 631 254 A1**
(43) Date of publication of application: **28.08.2013**
(21) Application number: 12157162.4
(22) Date of filing: 27.02.2012
(51) Int. Cl.: C08G 18/42, C08G 18/50, C08G 18/67, C09D 175/16, C08G 18/28

(54) **Fluorinated water-oil repellency agents**

(71) Applicant: Cytec Surface Specialties, S.A., 1070 Brussels (BE)
(72) Inventor: CAPPELLE, Steven, 9400 Ninove (BE); CLEYMANS, Ruben, 1500 Halle (BE); HUTCHINS, Marcus Lee, Hiram, GA Georgia 30141 (US)
(74) Representative: Schoofs, Hilde

(57) **Abstract**

The present invention relates to an active energy ray curable compound **(A)** comprising: at least one (poly)lactone-containing moiety **(a1),** at least one fluorine-containing moiety **(a3),** and at least one further moiety **(a2)** present between moieties **(a1)** and **(a3).**

The invention further relates to ways of making such compounds and to their use in providing water-oil repellency properties to a coating composition.

## Description

The present invention relates to fluorinated compounds showing an increased miscibility and compatibility with an active energy ray curable resin matrix, to their production and their use in applications that require amongst others excellent stain resistance and fingerprint removability. Smears such as fingerprints but also sebum, sweat and cosmetics tend to easily stick to e.g. hard coat films or stain resistant layers; and once they happen to stick, the smears tend to be difficult to remove. In particular on optical members with an antireflection film, the attached stains or smears stand out and are thereby problematic in various ways. First there is the aesthetic effect. When attempting to wipe off any smears with an ordinary paper or woven cloth, they rather spread out to soil the entire surface. Further there is the risk of damaging the hard coat or the stain resistant layer by doing so.

Generally, when a hard coat surface is provided with an easy-to-clean property a low surface energy additive is added (e.g. a silicone or fluoro additive).

Unfortunately standard fluorinated compounds tend to have a low affinity for commercial resins of a standard coating formulation leading to phase separation, low transparency and/or poor film formation. To increase the miscibility/compatibility between the fluorinated compound and the coating resin matrix, a compatibilizing group can be linked to the fluorinated compound. Several means to add a compatibilizing group are described in US 7439279.

Surprisingly, we found that the way in which compatibilizing groups like lactone units are linked to a water and/or oil repellent compound has a strong influence on both the additive/resin matrix compatibility and the coating transparency.

In Example B-7 of US 7439279 a fluorinated compound is generated by reacting a perfluoropolyether having hydroxyl groups on both terminal ends with an ε-(epsilon)caprolactone. The product is subsequently reacted with a methacryloyloxyethyl isocyanate to obtain an active energy ray curable oil repellent agent. Although it is claimed that the ε-(epsilon)-caprolactone will add by ring-opening to both terminals of the perfluoropolyether diol, we noticed that a large amount of unmodified perfluoropolyether alcohol remains. Urethane acrylates that do not comprise the compatibilizing caprolactone function will result in an inferior formulation transparency and a worse coating aspect.

Against this background we now provide an active energy ray curable compound **(A)** comprising at least one (poly)lactone-containing moiety **(a1),** and at least one fluorine-containing moiety **(a3),** wherein moieties **(a1)** and **(a3)** are not directly linked to each other. Typically at least one moiety **(a2)** is present between moieties **(a1)** and **(a3).**

Compounds **(A)** of the invention typically comprise at least one, and more typically at least two active energy ray curable groups per molecule. By "active energy ray curable groups" is meant functional groups which under the influence of irradiation with active energy rays and/or a (photo)initiator can undergo polymerization. Examples of such groups include (meth)acryloyl groups, vinyl group, allyl groups, thiol groups and/or epoxy groups.

Most typically the active energy ray curable groups are polymerizable ethylenically unsaturated groups. By "polymerizable ethylenically unsaturated groups" is meant to designate in the present invention carbon-carbon double bonds which under the influence of irradiation and/or a (photo)initiator can undergo radical polymerization. The polymerizable ethylenically unsaturated groups are generally chosen from (meth)acryloyl groups and/or allyl groups, preferably they are (meth)acryloyl groups, most preferably acryloyl groups. In the present invention, the term "(meth)acryloyl" is to be understood as to encompass both acryloyl and methacryloyl groups or derivatives as well as mixtures thereof.

Moieties **(a1)** can be lactone- and/or polylactone-containing moieties. Highly suitable are moieties **(a1)** that comprise at least one portion:

-(C(₌O)CᵤH₂ᵤO)ₜ- Formula (1),

wherein u is an integer of from 2 to 5, preferably from 3 to 5; and t is an integer of from 1 to 20, more typically from 1 to 10, preferably from 1 to 5, and most typically from 1 to 3. Moieties **(a1)** are typically selected from (poly)γ-(gamma)butyrolactone moieties, (poly)b-(delta)valerolactone moieties and/or (poly)ε-(epsilon)caprolactone moieties. Preferred are (poly)ε(epsilon)-caprolactone moieties and more in particular polyε(epsilon)-caprolactone moieties. Typically the weight percentage (wt%) of moieties **(a1),** relative to the total weight of the compound **(A),** is from 5 to 75 wt%. In general their amount is at least 7 wt%, preferably at least 10 wt%. Often their amount is at most 60 wt%, typically at most **50** wt%.

The active energy ray curable groups can be provided by a further moiety **(a4).** By "further" is meant that this moiety is different from moieties **(a1), (a2)** and **(a3).** Yet in an embodiment of the invention the active energy ray curable groups can also be provided by said same moiety **(a1).** Examples of suitable moieties **(a1')** are for instance those derived from active energy ray curable compounds that contain at least one (preferably essentially one) reactive group capable to react with isocyanate groups and at least one portion:

-(C(=O)CᵤH₂ᵤO)ₜ- Formula (1),

wherein u and t are integers are as specified above. Throughout the invention and unless stated otherwise by "reactive group capable to react with isocyanate groups" in general is meant a hydroxyl group. Other possible groups are amino or thiol groups. Hydroxyl groups are preferred.

Preferred in this category are in particular hydroxyC₁₋₄alkoxy(meth)acrylate-((poly)lactone)ₜ derived moieties **(a1')**, wherein t is an integer of from 1 to 20, preferably from 1 to 10 and most preferably from 1 to 5. Preferably the (poly)lactone is a (poly)caprolactone. Moieties **(a1')** may for instance be derived from compounds represented by Formula (2):

CH2=CH(R)-C(=O)-O-(CₙH2ₙ)r-O-(C(=O)-C₅H₁₀O)ₜ-H

wherein R= -H or -CH3, n is an integer of from 1 to 4, r is an integer from 1-4 and t is an integer of from 1 to 20, preferably from 1 to 10, more typically from 1 to 5. For examples of suitable compounds that may provide moieties **(a1') -** see compounds **(iii)** below.

Where present the weight percentage (wt%) of such moieties **(a1'),** relative to the total weight of the compound **(A),** typically is from 15 to 80 wt%. In general their amount is at least 17 wt%, preferably at least 20 wt%. Often their amount is at most 75 wt%, typically at most 60 wt%.

In general moieties **(a3)** are fluorine-containing moieties. Moieties **(a3)** advantageously are capable of exerting water and/or oil repellency. Typically moieties **(a3)** comprise at least one fluorine-containing organic group, more in particular at least one fluorine-containing organic group of a fluorine-containing compound which is generally used as a water repellent and/or oil repellent. Preferably moieties **(a3)** are selected from one or more of the following: a moiety containing one or more polyfluoroalkyl groups, a fluorinated alcohol-derived moiety and/or a fluorosilicone-derived moiety.

Examples of suitable compounds that may be used in the present invention include but are not limited to homopolymers of a polymerizable monomer containing a polyfluoroalkyl group such as a (meth)acrylate containing a polyfluoroalkyl group or a copolymer of such a monomer with another polymerizable monomer such as an acrylate, maleic anhydride, chloroprene, butadiene or methyl vinyl ketone; polyfluorinated oxetane alcohols such as those described in WO2001000701; hydroxyl functional fluoroethylene-alkyl vinyl ethers such as those described in (US 20110028612); fluorinated (poly)ether alcohols and/or hydroxyl functional fluorosilicone compounds. Such compounds are well known in the art.

Preferred in the frame of the present invention are moieties **(a1)** that are derived from fluorinated alcohols. Examples of suitable fluorinated alcohols are fluorinated oxetane alcohols, hydroxyl functional fluoroethylene-alkyl vinyl ethers, fluoroalkyl alcohols and/or fluorinated (poly)ether alcohols. For more examples of suitable fluorinated alcohols - see compounds **(i)** below.

Particularly preferred are fluorinated (poly)ether alcohol moieties, in particular polyfluoro(poly)ether alcohol moieties, more in particular perfluoro(poly)ether alcohol moieties **(a3).** The "term (poly)ether" covers both ethers and polyethers comprising a plurality of ether groups, as well as mixtures of both.

Most typically moieties **(a3)** comprise at least one portion represented by one or more of the Formulae (3) to (7):

-(CF₂CF₂O)ₚ- Formula (3)

-(CF₂CF(CF₃)O)q-; Formula (4)

-(CF₂CF₂CF₂O)r- Formula (5)

-(CF₂O)s- Formula (6)

-(CkF2k+1)- Formula (7);

wherein k is is an integer of from 1 to 16, and
wherein each of p, q, r and s is an integer of from 1 to 100, preferably from 1 to 80. When each of p, q, r and s is within the above range, the surface of the coating film after curing will be excellent in water and/or oil repellency, and excellent fingerprint removability will be maintained over a long period. Even more preferred are moieties **(a3)** that comprise at least one portion represented by one or more of the Formulae (3) to (6) as identified above.

Typically the weight percentage (wt%) of moieties **(a3),** relative to the total weight of the compound **(A),** is from 1 to 90 wt%. In general their amount is at least 20 wt%, preferably at least 30 wt%. Often their amount is at most 80 wt%, typically at most 70 wt%.

In the frame of the present invention, moieties **(a1)** and **(a3)** advantageously are separated from each other by at least one further moiety **(a2).** By "further" is meant herein that the moiety **(a2)** is different from moieties **(a1)** and **(a3).** Advantageously, moieties **(a2)** are also different from moieties **(a4)** or from any other moieties that may be present.

In a variant of the invention, moieties **(a1), (a2)** and **(a3)** are linked to each other in such a way that there is at least one urethane bond between moieties **(a1)** and **(a3).**

Preferred is a moiety **(a2)** that is capable to react with at least one of moieties **(a1)** and **(a3)** via a urethane bond. Even more preferred is a moiety **(a2)** capable to react with both of the moieties **(a1)** and **(a3)** via a urethane bond. Highly suitable for use in the present invention are hence polyisocyanate moieties **(a2).** Typical are moieties **(a1)** and **(a3)** that contain at least one reactive group capable to react with isocyanate groups (e.g. hydroxyl groups). Preferred are compounds **(A)** wherein the moiety **(a2)** connects with moieties **(a1)** and **(a3)** via a urethane bond. For more examples of suitable polyisocyanates - see compounds **(ii)** below.

Typically the weight percentage (wt%) of moieties **(a2),** relative to the total weight of the compound **(A),** is from 5 to 30 wt%. In general their amount is at least 7 wt%, preferably at least 10 wt%. Often their amount is at most 25 wt%, typically at most 20 wt%.

Typically compounds **(A)** are prepared from moieties **(a1)** to **(a4),** more in particular from moieties **(a1')** to **(a3)** as described above.

Compounds **(A)** can be prepared in various different ways. Below some preferred ways to prepare compounds **(A)** of the invention are described.

In an embodiment of the invention, compounds **(A)** may be obtained from the reaction of:
at least one fluorinated alcohol **(i),** optionally, at least one alcohol **(iv)** different from **(i),** at least one polyisocyanate **(ii),** and at least one (poly)lactone-modified compound **(iii)** containing at least one active energy ray curable group and at least one (preferably essentially one) reactive group capable to react with isocyanate groups.

The optional compounds **(iv)** may replace up to 75% by weight of compounds **(i).** Often this amount is at most 50 wt%, more often at most 25 wt%. In a first variant of this embodiment, no compounds **(iv)** are used to prepare compounds **(A)** of the invention. In a second variant, compounds **(iv)** are used to prepare compounds **(A)** of the invention. In a third variant a mixture of both types of compounds **(A)** may be used in the frame of the present invention.

The optional compounds **(iv)** typically are hydrophobic hydroxyl functional compounds including but not limited to hydroxyl functional alkoxysilanes such as described in US 20060102050 and/or fatty alcohols (typically C7-C22) such as lauryl, myristyl, cetyl, stearyl described in e.g. US20110048281 and/or long chain alkyl alcohols (typically C6-C35) such as described in e.g. US 20110008634 and US 20100215775.

Typically compounds **(A)** according to this first embodiment are obtained via a process comprising:
- a first step comprising the reaction of at least one fluorinated alcohol (compound i) and at least one polyisocyanate (compound **ii)** to form an NCO terminated (poly)urethane prepolymer, and
- a second step comprising the reaction of the product of the first step with at least one (poly)lactone-modified compound **(iii)** containing at least one active energy ray curable group and at least one (preferably essentially one) reactive group capable to react with isocyanate groups. Alternatively, the first step may comprise the reaction of at least one compound **(iii)** with at least one compound **(ii)** and the second step then comprises the further reaction with at least one compound **(i).** In each of these variants the at least one active energy ray curable group typically is a (meth)acryloyl group. Typically compounds **(iii)** are end-capping agents. Optionally, at least one compound **(iv)** can be used in admixture with at least one compound **(i).**

The present invention relates to the above described processes for preparing compounds **(A)** as well as to compounds **(A)** obtainable via said processes. In particular, the present invention also provides for (poly)lactone-modified end-capped active energy ray curable polyfluoropolyether urethane compounds **(A).** Preferred process conditions and preferred compounds **(i)** to **(iii)** and where present **(iv)** are described below.

The process of the invention can be carried out by reacting a stoechiometric excess of compounds **(ii)** with compounds **(i)** and optionally **(iv),** preferably under substantially anhydrous conditions and at a temperature between 30°C and 130°C, more preferably between 70°C and 100°C, until the reaction between the isocyanate groups and the isocyanate-reactive groups is substantially complete. The isocyanate content can be followed by titration with an amine. The reactants are generally used in proportions corresponding to an equivalent ratio of isocyanate groups provided by compound **(ii)** to isocyanate-reactive groups provided by compounds **(i)** and where present **(iv)** of from about 1.5 to about 4, preferably from about 1.8 to about 2.5. The reaction may be facilitated by the addition of about 5 to about 40%, preferably about 15 to about 25%, by weight of a solvent in order to reduce the viscosity of the pre-polymer. The solvent is preferably acetone or methylethylketone. During this process, it is common to use catalysts to accelerate the reaction of the isocyanates towards isocyanate-reactive groups (e.g. hydroxyls) and to use inhibitors in order to prevent the radical reaction of the reactive unsaturations. It is possible in the frame of this invention to use a sequential process during which compound **(i)** and/or compounds **(ii)** and/or compounds **(iv)** are added incrementally in two or several portions, or with a continuous feed. The reason for this is a better control on the exothermicity of the reaction, especially when no solvent is present.

In a subsequent step, the isocyanate-terminated polyurethane pre-polymer is reacted with one or more compounds **(iii),** preferably in the same conditions as for the previous step. The reactants are generally used in proportions corresponding to an equivalent ratio of isocyanate groups provided by the pre-polymer obtained in the first step to isocyanate-reactive groups provided by compound **(iii)** of from about 0.5 to about 1.5, preferably from about 0.7 to about 1.2. The isocyanate content can be followed by titration with an amine.

Compounds **(i)** typically are fluorinated alcohols that may be selected from fluoroalkyl alcohols, fluorinated oxetane alcohols (more in particular perfluoro oxetane alcohols), hydroxyl functional fluoroethylene-alkyl vinyl ethers (more in particular perfluoroalkylvinylether alcohols) and/or fluorinated (poly)ether alcohols (more in particular perfluoro(poly)ether alcohols).

Fluorinated (poly)ether alcohols, in particular polyfluoro(poly)ether alcohols, and more in particular perfluoro(poly)ether compounds containing one or more hydroxyl groups are preferred.

Preferred are compounds **(i)** that comprise at least one portion represented by one ore more of the Formulae (3) to (7):

-(CF₂CF₂O)p- Formula (3)

-(CF₂CF(CF₃)O)q-; Formula (4)

-(CF₂CF₂CF₂O)r- Formula (5)

-(CF₂O)s- Formula (6)

-(CₖF₂ₖ₊₁)- Formula (7);

wherein k, p, q, r and s are as defined above. Preferred are portions according to any of Formulae (3) to (6). Most typically these compounds **(i)** have a hydroxyl functionality between 1 and 4, more typically between 1 and 2. Preferred are diols.

Examples of suitable compounds **(i)** include but are not limited to: Fluorolink® E, Fluorolink® E10, Fluorolink® E10H, Fluorolink® D, Fluorolink® D10, Fluorolink® D10H, Fluorolink® T10, and Fluorolink® T from Solvay Solexis, Demnum-SA from Daikin, Krytox® OH from Dupont™, LUMIFLON® LF200F and LUMIFLON® LF916F from AGC Chemicals, PolyFox® PF-636 PolyFox® PF-6320, PolyFox® PF-656, PolyFox® PF-6520 and PolyFox® PF-7002 from OMNOVA, and mixtures thereof (of any of these).

The amount of compounds **(i)** used for the synthesis of compounds **(A)** is generally in the range of from 1 to 90 wt%. Preferably their amount is at least 30 wt%, and typically at least 40 wt%. In general their amount is at most 80 wt%, and typically at most 70 wt%, relative to the total weight of the compound **(A).**

By a "polyisocyanate" (compound ii) in the present invention is meant to designate an organic compound comprising at least two isocyanate groups. The polyisocyanate usually comprises not more than three isocyanate groups. The polyisocyanate compound most preferably is a diisocyanate. Polyisocyanates may be selected from one or more aliphatic, cycloaliphatic, aromatic and/or heterocyclic polyisocyanates well known in the art. Examples of aliphatic and cycloaliphatic polyisocyanates that may be used are: 1,6-diisocyanatohexane (HDI), 1,1'-methylene bis[4-isocyanatocyclohexane] (H12MDI), 5-isocyanato-1-isocyanatomethyl-1,3,3-trimethylcyclohexane (isophorone diisocyanate, IPDI). Aliphatic polyisocyanates containing more than two isocyanate groups are for example the derivatives of above mentioned diisocyanates like 1,6-diisocyanatohexane biuret and isocyanurate. Examples of aromatic polyisocyanates that may be used are 1,4-diisocyanatobenzene (BDI), 2,4-diisocyanatotoluene (TDI), 1,1'-methylenebis[4-isocyanatobenzene] (MDI), xylilene diisocyanate (XDI), 1,5-naphtalene diisocyanate (NDI), tolidine diisocyanate (TODI), tetramethylxylylene diisocyanate (TMXDI) and p-phenylene diisocyanate (PPDI). Preferred are aliphatic polyisocyanates, most preferred are aliphatic diisocyanates.

The amount of compounds **(ii)** used for the synthesis of compounds **(A)** is generally in the range of from 5 to 75 wt%. Preferably their amount is at least 7 wt%, and typically at least 10 wt%. In general their amount is at most 60 wt%, and typically at most 40 wt%, relative to the total weight of the compound **(A).**

Preferably (poly)lactone-modified compounds **(iii)** contain at least one active energy ray curable group and essentially one reactive group capable to react with isocyanate groups. By (poly)lactone-modified compounds is meant to designate compounds containing lactone units, polylactone units, or a mixture of both. Typically compounds **(iii)** comprise at least one portion corresponding to Formula (1) as defined above.

An example of suitable compounds **(iii)** are the reaction products (or adducts) of a (poly)lactone **(vi)** and a hydroxy (meth)acrylate **(vii)** comprising at least one hydroxyl group, preferably a hydroxyalkyl(meth)acrylate, wherein the reaction product contains on average one (or essentially one) hydroxyl functional group capable to react with e.g. isocyanate groups. Suitable compounds **(vi)** include but are not limited to (poly)γ-(gamma)butyrolactones, (poly)δ-(delta)valerolactones and/or (poly)ε-(epsilon)caprolactones. Preferred are (poly)ε(epsilon)-caprolactones and more in particular polyε(epsilon)-caprolactones.

Useful compounds **(vii)** include the esterification products of aliphatic and/or aromatic polyols with (meth)acrylic acid having a residual average hydroxyl functionality of about 1. In this context, it is also possible to use reaction products of such polyols with lactones, which add to these polyols in a ring-opening reaction. These modified or unmodified polyols are partly esterified with acrylic acid, methacrylic acid or mixtures thereof until the desired residual hydroxyl functionality is reached. Compounds **(vii)** obtained from the reaction of (meth)acrylic acid with aliphatic, cycloaliphatic or aromatic compounds bearing one epoxy functionality together with at least one (meth)acrylic functionality can be used as well. Other suitable compounds (vii) are the (meth)acrylic esters with linear and branched polyols in which at least one hydroxy functionality remains free, like hydroxyalkyl(meth)acrylates having from 1 to 20 carbon atoms in the alkyl group. Preferred molecules **(vii)** in this category are hydroxymethyl (meth)acrylate, hydroxyethyl (meth)acrylate, hydroxypropyl (meth)acrylate and/or hydroxybutyl (meth)acrylate.

The amount of hydroxy (meth)acrylates, in particular hydroxyalkyl (meth)acrylates **(vii)** used for the synthesis of compounds **(iii)** is generally in the range from 5 to 80 wt%. Preferably their amount is at least 10 wt% and typically at least 15 wt%. In general their amount is at most 70 wt%, and typically at most 60 wt%, relative to the total weight of the compound **(iii).**

Particularly suited compounds **(iii)** are hydroxyC₁₋₄alkoxy(meth)acrylate-((poly)lactone)ₙ compounds, wherein n is an integer of from 1 to 20, preferably from 1 to 10 and most preferably from 1 to 5.

Particularly preferred are compounds **(iii)** represented by Formula (2):

CH2=CH(R)-C(₌O)-O-(CₙH2ₙ-O)r-(C(=O)-C₅H₁₀O)ₜ-H

wherein R= -H or -CH3, n is an integer of from 1 to 4, r is an integer from 1 to 4 and t is an integer of from 1 to 20, preferably from 1 to 10, more typically from 1 to 5. Examples thereof are Tone M100 (Dow Chemical) and/or Bisomer PEMCURE 12A (Cognis).

The amount of compounds **(iii)** used for the synthesis of compounds **(A)** is generally in the range of from 5 to 75 wt%. Typically their amount is at least 7 wt%, more typically at least 10 wt%. Generally their amount is at most 60 wt%, preferably at most 40 wt%, relative to the total weight of the compound **(A).**

Compounds **(A)** of the invention typically are characterized by a weight average molecular weight (Mw) of from 500 to 50,000 Daltons, preferably from 500 to10,000 Daltons.

Molecular weights in the invention typically are typically determined by conventional gel permeation chromatography (GPC) using polystyrene standards (typically in the Molecular Weight range: 200 - 7.500.000 Daltons).

Compounds **(A)** of the invention typically are characterized by a viscosity as determined according to DIN EN ISO 3219 in the range of from 500 mPa.s at 25 °C to 1,000,000 mPa.s at 60°C. Preferred is a viscosity of from 1,000 mPa.s at 25°C to 500,000 mPa.s at 60°C.

Besides providing hydrophobicity, compounds **(A)** of the invention are capable of one or more of the following: imparting chemical stability, weathering resistance, release properties, high temperature resistance, barrier properties, low coefficients of friction, water impermeability, corrosion resistance, low refractive index etc. to coatings prepared from such materials. Non-wettable surfaces may further also impart the ability to prevent frost and/or ice forming or adhering to the surface.

Compounds **(A)** of the invention were found to exhibit excellent miscibility and compatibility with radiation curable resin matrices standard in the art. Compounds **(A)** of the invention further are highly suitable for use in coating compositions that require excellent stain resistance and fingerprint removability.

Provided as such is also a composition, in particular an active energy ray curable composition, more in particular a radiation curable composition comprising at least one compound **(A)** according of the invention.

Typically compositions of the invention may further comprise at least one other curable compound **(B)** containing at least one active energy ray curable group. The active energy curable groups of compounds **(B)** typically are selected from (meth)acryloyl groups, allyl groups and/or vinyl groups. Most typically they are (meth)acryloyl groups. By "other" is meant that it is different from compounds **(A).**

Typically compositions of the invention comprise, relative to the total weight of the organic non-volatile content of the composition, from 0.5 to 100 wt% of compounds **(A).** Usually, this amount is at least 1 wt%, preferably this amount is at least 2 wt%, more preferably at least 3 wt%, even more preferably at least 5 wt%. Often this amount is at least 10 wt%, or even at least 15 wt%. In general this amount is at most 99.5 wt%, often at most 99 wt%. Usually this amount is at most 99.9 wt%, in general at most 99.5 wt%. Typically this amount is at most 99 wt%, at most 98 wt%, more typically at most 97 wt%. Most typically this amount is at most 90 wt%.

Typically compositions of the invention comprise, relative to the total weight of the organic non-volatile content of the composition, from 0 to 99.5 wt% compounds **(B).** Where present, they are typically present in an amount of at least 10 wt%, more typically at least 30 wt%. Typically this amount at most 97 wt%, most typically at most 90 wt%.

Typically, compositions of the invention comprise, relative to the total weight of the organic non-volatile content of the composition, from 0.5 to 100 wt% of compounds **(A)** and from 0 to 99.5 wt% of compounds **(B).** Preferably the amount of compounds **(A)** expressed this way is from 3 to 50 wt% and the amount of compounds **(B)** from 50 to 97 wt%. More typically the amount of compounds **(A)** expressed this way is from 10 to 30 wt% and the amount of compounds **(B)** from 70 to 90 wt%.

Compounds **(B)** typically are (meth)acrylated compounds. (Meth)acrylated compounds **(B)** can be monomers or oligomers, or a mixture of both.

An example of suitable monomers **(B)** are alkyl (meth)acrylates represented by a formula CH2=C(R¹)COOC_{z}H_{2z+1} (wherein R¹ is a hydrogen atom or a methyl group, and z is an integer of from 1 to 13, provided that C_{z}H_{2z+1} may have a straight chain structure or a branched structure), like allyl (meth)acrylate, benzyl (meth)acrylate butoxyethyl (meth)acrylate, butanediol (meth)acrylate, butoxytriethylene glycol mono(meth)acrylate, t-butylaminoethyl (meth)acrylate, 3-chloro-2-hydroxypropyl (meth)acrylate, 2-cyanoethyl (meth)acrylate, cyclohexyl (meth)acrylate, 2,3-dibromopropyl (meth)acrylate, dicyclopentenyl (meth)acrylate, N,N-diethylaminoethyl (meth)acrylate, N,N-dimethylaminoethyl (meth)acrylate, 2-ethoxyethyl (meth)acrylate, 2-(2-ethoxyethoxy)ethyl (meth)acrylate, 2-ethylhexyl (meth)acrylate, glycerol (meth)acrylate, glycidyl (meth)acrylate, heptadecafluorodecyl (meth)acrylate, 2-hydroxyethyl (meth)acrylate, 2-hydroxy-3-(meth)acryloyloxypropyltrimethylammonium chloride, 2-hydroxypropyl (meth)acrylate, [gamma]-(meth)acryloxypropyltrimethoxysilane, 2-methoxyethyl (meth)acrylate, methoxydiethylene glycol (meth)acrylate, methoxytriethylene glycol (meth)acrylate, methoxytetraethylene glycol (meth)acrylate, methoxydipropylene glycol (meth)acrylate, methoxylated cyclodecatriene (meth)acrylate, morpholine (meth)acrylate, nonylphenoxypolyethylene glycol (meth)acrylate, nonylphenoxypolypropylene glycol (meth)acrylate, octafluoropentyl (meth)acrylate, phenoxyhydroxypropyl (meth)acrylate, phenoxyethyl (meth)acrylate, phenoxydiethylene glycol (meth)acrylate, phenoxytetraethylene glycol (meth)acrylate, phenoxyhexaethylene glycol (meth)acrylate, phenoxy (meth)acrylate, polypropylene glycol (meth)acrylate, sodium 2-sulfonate ethoxy (meth)acrylate, tetrafluoropropyl (meth)acrylate, tetrahydrofurfuryl (meth)acrylate, trifluoroethyl (meth)acrylate, hexafluoroisopropyl acrylate, vinyl acetate, N-vinyl caprolactam, N-vinylpyrrolidone, dicyclopentadienyl (meth)acrylate and/or isobornyl acrylate.

Preferred however are monomers with at least 2, more preferably at least 3 polymerizable functional groups such as (meth)acryloyl groups. Examples of poly-unsaturated compounds from this category are trimethylolpropane tri-(meth)acrylate, glycerol tri-(meth)acrylate, pentaerythritol tri,tetra-(meth)acrylate, pentaerythritol tetra-(meth)acrylate, di-trimethylolpropane tetra-(meth)acrylate, di-pentaerythritol hexa-(meth)acrylate and their (poly)ethoxylated and/or (poly)propoxylated equivalents, as well as mixtures thereof. The acrylated forms hereof are preferred. Most preferred are di- and/or tri-acrylates. Examples thereof include but are not limited to: EBECRYL® 145, EBECRYL® 160, trimethylolpropane tri-(meth)acrylate and/or pentaerythritol tri/tetra(meth)acrylate (PETIA) from Cytec.

Preferably, compositions of the invention comprise at least one monomer **(B)** that comprises at least three 3 polymerizable functional groups such as (meth)acryloyl groups.

Preferably compositions of the invention comprise, relative to the total weight of the organic non-volatile content of the composition, at least 10 wt%, more preferably at least 20 wt% and more preferably at least 30 wt% of monomeric compounds **(B),** in casu diluents.

It is also possible to use one or more oligomeric compounds **(B)** selected from: (poly)urethane (meth)acrylates, (poly)ester (meth)acrylates, (poly)ether (meth)acrylates, epoxy (meth)acrylates and/or (meth)acrylic (meth)acrylates. Such compounds are well known in the art.

Preferred are (poly)urethane (meth)acrylates, polyester(meth)acrylates and/or (meth)acrylic (meth)acrylates. Most preferred are (poly)urethane (meth)acrylates and more in particular polyurethane acrylates. By (poly)urethanes is meant to designate urethanes, polyurethanes, and mixtures of both. A polyurethane is meant to designate an organic compound comprising at least 2 carbamate groups. Suitable for use in the present invention are in particular (poly)urethane (meth)acrylates comprising at least 3 (meth)acrylate groups. Preferably the functionality is higher than 3, more preferably higher than 6 or even higher. Suitable for use in the invention are for instance EBECRYL® 1290, EBECRYL® 5129, EBECRYL® 8301, EBECRYL® 8254, EBECRYL® 8405, EBECRYL® 8465 and/or EBECRYL® 8701 from Cytec. Compositions of the invention typically comprise, relative to the total weight of the organic non-volatile content of the composition, from 0 to 90 wt% of such oligomeric compounds **(B).** In general this amount is at least 10 wt% and in general at most 80wt%.

Compositions of the invention may further comprise any known water and/or oil repellency-imparting agent **(C)** which is different from compounds **(A).** Examples include but are not limited to: a fluorine type water and oil repellency-imparting agent using e.g. a fluororesin of e.g. tetrafluoroethylene or vinylidene fluoride, a fluorine compound having a perfluoroalkyl group, a silicone type water and oil repellency-imparting agent using an organopolysiloxane having a siloxane bond in its main chain and having an alkyl group such as a methyl group, an ethyl group or a propyl group; or an organopolysilazane having a silazane bond in its main chain and having an alkyl group such as a methyl group, an ethyl group or a propyl group or a fluoroalkyl group in its side chain, a wax type water and oil repellency-imparting agent using e.g. bees wax or paraffin, or a metal salt type water and oil repellency-imparting agent using a salt of zirconium and a fatty acid, or a salt of aluminum and a fatty acid. Preferred herein are fluorinated compounds and/or silicone compounds **(C).** For instance, compositions of the invention may further comprise one or more silicone compounds and/or fluorinated compounds that are different from compounds **(A).**

When present, compounds **(C)** typically are used in an amount of at most 100 parts by mass per 100 parts by weight of the total weight of compounds **(A).** In general this amount is at most 50, most preferable at most 30 parts by mass of 100 parts by weight of the total weight of compounds **(A).**

Compositions of the invention are preferably curable by ultraviolet irradiation, generally in the presence of photoinitiator **(D).** They can also be cured by electron-beam irradiation, allowing the use of compositions free of photoinitiator. The compositions according to the invention are providing extremely rapid curing.

Photoinitiators **(D)** where present typically are added in an amount of from 0.1 to 10 parts by mass per 100 parts by mass of photopolymerizable compounds. Examples of suitable photoinitiators include but are not limited to an aryl ketone type photoinitiator (such as an acetophenone, a benzophenone, an alkylaminobenzophenone, a benzyl, a benzoin, a benzoin ether, a benzoin dimethyl ketal, a benzoyl benzoate or an [alpha]-acyloxime ester), a sulfur-containing photopolymerization initiator (such as a sulfide or a thioxanthone), an acylphosphine oxide (such as an acyldiarylphosphine oxide) or other photopolymerization initiators. The photopolymerization initiator may be used as a mixture of at least two types thereof in combination. Further, the photopolymerization initiator may be used in combination with a photosensitizer such as an amine.

Compositions of the invention may further comprise, if the case requires, at least one of the following: an ultraviolet absorber, a photostabilizer, an antioxidant, a thermal polymerization inhibitor, a leveling agent, a defoaming agent, a thickener, a sedimentation-preventing agent, a pigment (organic coloring pigment, inorganic pigment), a coloring dye, an infrared absorber, a fluorescent brighter, a dispersant, an antistatic agent, an anti-fogging agent, and/or a coupling agent.

Further, a colloidal silica **(E)** may be added to compositions of the invention to further improve abrasion resistance of the coating film after curing. The average particle size of the colloidal silica **(E)** is not particularly limited, but is preferably from 1 to 1,000 nm, particularly preferably from 1 to 200 nm, especially preferably from 1 to 50 nm, so as to obtain high transparency of the coating film after curing. In order to improve dispersion stability of the colloidal silica **(E),** the surface of the particles may be modified with a hydrolyzate of a hydrolysable silane compound. Where colloidal silica **(E)** are added, they preferably are added in an (solid content) of at least 0.1 part by mass and at most 500 parts by mass, more preferably at least 1 part by mass and at most 300 parts by mass, particularly preferably at least 10 parts by mass and at most 200 parts by mass, per 100 parts by mass of non-volatile organic content of compound. When the blending amount is within this range, the coating film after curing tends to have sufficient abrasion resistance, haze is less likely to occur on it, and cracks or the like due to an external force are less likely to occur on it.

Organic solvent can be used to reduce viscosity of the coating formulation. The organic solvents typically are removed by heating and drying before cure. In this instance, the heating and drying temperature is preferably, for example, 40° C. or higher to 100° C. or lower. The heating and drying time is, for example, from at least 30 seconds to at most 8 minutes, preferably from at least 1 minute to at most 5 minutes, and more preferably from at least 3 minutes to at most 5 minutes. No particular restriction is given to non-reactive dilution organic solvents that may be used in the invention, including propylene glycol monomethylether acetate, propyleneglycol monomethylether, ethylene glycol monomethylether, butyl acetate, methyl ethyl ketone, methyl isobutyl ketone and isopropyl alcohol - see for instance US 7632874, c14.

If an organic solvent is added at all, then care is taken that it poses no problem in solubility of compounds **(A)** through **(E)** and other additives. It may be any solvent which satisfies the above performances. Further, two or more types of organic solvents may be used in combination. In a case where an organic solvent is added to a composition of the invention, it is preferred to select a proper organic solvent in accordance with the type of the substrate on which a coating film is formed.

Compositions of the invention may be applied in any suitable way known in the art such as spraying, rolling, knife-coating, pouring, brushing, dipping and the like. Also application techniques which will impart micro-nanostructures to the coatings surface are possible like micro- nano gravure, photolithography, UV-nanoimprinting, nano-embossing, micro-replication, electrospinning and the like.

The active energy rays used for curing preferably are ultraviolet rays, electron rays, X-rays, radioactive rays or high frequency waves. Ultraviolet rays having a wavelength of from 180 to 500 nm are particularly preferred from economical viewpoint. Some examples of lamps that may be used include but are not limited to xenon lamps, low-pressure mercury lamps, high-pressure mercury lamps, superhigh-pressure mercury lamps, metal halide lamps, carbon arc lamps or a tungsten lamps, LED lamps, UV-A lamps etc.

Curing time and conditions may vary according to the constituents of the composition, the thickness of the coating film and the active energy ray source used. Usually curing is achieved by irradiation for about 0.1 to about 60 seconds. Further, for the purpose of completing the curing reaction, a heat treatment may be carried out after irradiation with active energy rays. Compositions of the invention typically have a viscosity at 25 degrees Celsius (°C) in the range of from 1 to 50,000 mPa.s. More preferably the viscosity at this temperature is in the range of from 10 to 20,000 mPa.s, most preferably from 50 to 10,000 mPa.s.

Compositions of the inventions advantageously combine an improved compatibility and miscibility with the coating resin matrix and standard additives, with high transparency, fingerprint removability, as well as stain and marker resistance. An advantage of compositions of the invention is that fingerprint removability is long lasting. Not only was it more easy to remove any fingerprints that formed, fingerprints in addition were less likely to attach and caused less damage to the coating surface when wiped with a dry cloth or tissue. Compositions of the invention may further improve anti-corrosion resistance. Non-wettable surfaces may further also impart the ability to prevent frost and/or ice forming or adhering to the surface.

Compositions of the invention further allow to obtain an excellent abrasion resistance.

In contrast to standard coating formulations, coating compositions of the invention showed high transparency, less phase separation and exhibited a good film formation capacity. Compositions of the invention typically have a haze after cure of at most 2 %, more preferably at most 1%, most preferably at most 0.5 %.

Compositions of the invention typically are characterized by a light transmission (T) of at least 80%, more preferably at least 90%, most preferably at least 95%.

Compositions of the invention are highly suited for the making of coating compositions, and more in particular hard coating compositions. The thickness of the hard coat composition typically ranges from 1 to 100 µm. Typically the thickness after curing is at least 1 µm, more typically at least 3 µm, most typically at least 5 µm. Typically the thickness is at most 50 µm, more typically at most 30 µm, most typically at most 25 µm. The coating may be applied in one or more layers depending on the application.

Hard coating compositions according to the invention typically have a pencil hardness after curing as determined by ASTM D3363 of at least H, more in particular at least 2H.

Coating compositions of the invention are further capable of providing a coating film after curing with a haze of at most 2%, more in particular at most 1 %, most in particular at most 0.5%. Coating compositions of the invention are also capable of providing a coating film after curing with a contact angle relative to water on the surface of the coating film of at least 95°, more preferably of at least 100°.

Coating compositions of the invention are further also capable of providing a coating film after curing with a contact angle relative to n-hexadecane on the surface of the coating film of at least 60°, more preferably of at least 62°, most preferably of at least 65°.

Provided in the invention is further a process of coating or treating an article or a substrate, entirely or in part, with a composition of the invention, said process comprising the steps of applying to at least one surface of the article or substrate a composition according to the invention, followed by curing using active energy rays. Typically compositions of the invention are cured using UV irradiation, typically in the presence of a photoinitiator, or using electron beams. Where needed, the curing step may be preceded by a drying step. Where needed, a heat treatment may be carried out after irradiation with the active energy rays.

Typically, any article or substrate coated as such is provided with a coating film that after curing has a contact angle relative to water deposited on the surface of the coating film of at least 95°, more preferably of at least 100°. Typically the contact angle relative to n-hexadecane deposited on the surface of the coating film is at least 60°, more preferably of at least 62°, most preferably more preferably of at least 65°.

Yet another aspect of the invention relates to an article or a substrate coated or treated according to said process.

Coating compositions of the invention may be used in a wide variety of applications and on a wide variety of substrates and articles including molded articles. Coating compositions of the invention are further suited for the making of polymer composite materials or plastic sheets. For instance compositions of the invention may be used on and in satellite dishes, solar energy panels, photovoltaics, exterior architectural glass and green houses, concrete, metal (alloy wheel rims), (automotive) plastic, consumer electronics (mobile phone and PDA displays and showcases; touch screens, large screens and displays (e.g., LCD, CRT, plasma), films (temporary protection self adhesive films for LCDs, solar control windows) and heat transfer surfaces in air conditioning equipment. Other applications include mirror-finished metal plates, glass show windows, showcases, opening materials of automobiles, windshields, mirrors, sunroofs, and headlamps of automobiles and other vehicles, antireflection films, optical filters, optical lenses, displays, projection televisions, plasma displays, EL displays, optical disks, etc. Because of their properties compositions of the invention may further find use in anticorrosive coatings, architectural outdoor applications, as well as indoor and outdoor automotive applications. Since a coating of the invention also provides a low coefficient of friction, it may also be applied on pipes and tubes being used for liquid or gas transport.

Substrates that may be treated or coated with compositions of the invention include metal, wood, paper, concrete, plastics (porous and non-porous), glass, as well as coating surfaces. Articles or materials to which the coating composition is applied may for instance already contain one or more coating layers (e.g. articles or material may already contain a primer or a base coat).

Besides a use as coating compositions, the compositions of the invention may further be used for the making of inks, varnishes and adhesives.

Provided are also coatings compositions, inks, varnishes and adhesives that are prepared from, or that comprise, a composition of the invention.

Another aspect of the invention relates to the use of a composition of the invention for the making of a coating film that after curing has a contact angle relative to water on the surface of the coating film of at least 95°, more preferably of at least 100°.

Yet another aspect of the invention relates to the use of a composition of the invention for the making of a coating film that after curing has a contact angle relative to n-hexadecane on the surface of the coating film of at least 60°, more preferably of at least 62°, most preferably of at least 65°.

Still a further aspect of the invention relates to the use of a composition of the invention for the making of a transparent coating that after cure has a light transmission (T) of >90%.

Throughout the Invention and in the Examples Section the following measuring methods have been used to characterize the compounds and compositions of the invention as well as coatings obtained herewith:
Molecular weight determination via GPC: A small portion of sample is dissolved in tetrahydrofuran (THF) and injected into a liquid chromatograph (Merck-Hitachi L7100) equipped with 4 PLGel Mixed-A polystyrene divinylbenzene GPC columns (300mm X 7.5mm X 20µm). Typically polystyrene standards (typically in the Molecular Weight range: 200 - 7.500.000 Daltons) are added as internal standards. The components of the sample are separated by the GPC columns based on their molecular size in solution and detected by a Refractive Index detector. Data typically are gathered and processed by Polymer Laboratories Cirrus GPC software. Viscosity (cone plate): viscosity was measured with a rotational viscometer at 25°C with defined shear rate of 20 s-1, according to DIN EN ISO 3219. The viscosity value is expressed in mPa.s Contact Angle: The contact angle of water or n-hexadecane droplets was determined using a OCA20 station of DataPhysics equipped with a CCD videocamera. For this purpose, sessile drops were formed on the substrate using an automated syringe fitted with a teflonated circular steel needle (Hamilton) inserted in the drop. The drop volume was increased to 10 and 15 µL at a steady rate of 1 µL s-1. Next the needle was slowly removed from the drop while recording the image sequence using a digital video system ("frame grabber"). The digital drop images were subsequently analysed and the shape was fitted to the Laplace-Young equation in order to determine the contact angle. Average CA values of two drops (10 and 15 µL) are reported. Fingerprint Removability: The fingerprints attached to the surface of a sample coating film were wiped off by a dry cloth, and the removability was visually judged.

The evaluation standards were as follows:
O: Fingerprint completely removable.
X : Fingerprint not removable.

Transparency of coated films: The haze (%) is measured on four points of a 200 µm polycarbonate film coated with a 10 µm thick coating layer with a haze meter (XL-211 Hazegard Hazemeter from BYK Gardner). Average haze values measured on 4 different points on the coated substrate are calculated.

The invention is now further described in more details in the following Examples, which in no way intend to limit the invention or its applications.

### Synthetic example 1: Fluorinated compound (A) according to the invention

842.3 g of the Fluorolink D10H, 0.45 g of trisphenylphosphite (TPP), 0.453 g of butylated hydroxytoluene (BHT), 266.3 g of isophorone diisocyanate and 0.39 g of dibutyltindilaurate (DBTL) were placed into a reaction flask equipped with an agitator, liquid addition funnel and thermometer. The reaction mixture was heated to 90°C and stirred until the NCO content was about 4.85 %. The addition funnel was fed with a mixture of 405.7 g of Tone M100 and 0.45 g of DBTL which was added in 2 hours. The reaction mixture was maintained at 80°C until the residual NCO content was lower than 0.2 %. After addition of 4252 g PETIA, a product composition with a viscosity (Höppler, ISO 12058 at 25°C) of 4677 mPa.s °C was obtained.

### Synthetic example 2R: Fluorinated oligomer with position of the lactone groups as in US 7439279

488 g of the Fluorolink D10H, 162 g ε(epsilon)-caprolactone, 0.65 g of dibutyltindilaurate (DBTL) were placed into a reaction flask equipped with an agitator, liquid addition funnel and thermometer. The reaction mixture was heated to 120°C and stirred until the ε(epsilon)-caprolactone was lower than 1 %. The reaction product was cooled down to 30°C and 154.3 g of isophorone diisocyanate was added. The reaction mixture was heated to 90°C and stirred until the NCO content was about 4.0 %. The addition funnel was fed with a mixture of 81 g of hydroxyethyl acrylate and 0.27 g of DBTL which was added in 2 hours. The reaction mixture was maintained at 80°C until the residual NCO content was lower than 0.2 %. After addition of 2656 g PETIA a product composition with a viscosity (Höppler, ISO 12058 at 25°C) of 8075 mPa.s was obtained.

### Synthetic example 3R: Fluorinated oligomer without lactone modification

606.3 g of the Fluorolink E10H, 0.38 g of trisphenylphosphite (TPP), 0.11 g of butylated hydroxytoluene (BHT), 179.3 g of isophorone diisocyanate and 0.3 g of dibutyltindilaurate (DBTL) were placed into a reaction flask equipped with an agitator, liquid addition funnel and thermometer. The reaction mixture was heated to 90°C and stirred until the NCO content was about 4.81 %. The addition funnel was fed with a mixture of 94 g of 2-hydroxylethyl acrylate and 0.3 g of DBTL which was added in 2 hours. The reaction mixture was maintained at 75°C until the residual NCO content was lower than 0.1 %. After addition of 2639 g PETIA a product composition with a viscosity (Höppler, ISO 12058 at 25°C) a whitely cloudy product with a viscosity (Höppler, ISO 12058 at 25°C) of 2465 mPa.s was obtained.

### Formulation examples:

### Examples 1 to 3 and Comparative Examples 1R to 7R:

Oligomers as prepared according to Synthetic Examples 1 and 2R-3R were tested in 3 different concentrations in a base coating formulation. The formulations were made by mixing the product examples with a urethane acrylate : EBECRYL® 1290 (available from Cytec), acrylated monomers : EBECRYL® 145 (available from Cytec), EBECRYL® 160 (available from Cytec) and pentaerythritol tri/tetra acrylate PETIA (available from Cytec); and initiator Additol CPK (available from Cytec). Information on the compositions of the base formulation tested and characteristics thereof are given in Table 1 below. A comparison was made with a standard hard coat formulation - Example 1 R.

The results show an improved compatibility when using compounds **(A)** of the invention compared to compounds that lack a lactone modification (Synthetic Example 3R) or have an arrangement as described in Example 7B of Asahi (Synthetic Example 2R).

### Applications and testing:

UV formulations were applied by means of a 10 µm bar coater on a transparent sheet made of polycarbonate resin with a thickness of 0.2 mm and exposed to UV radiations from a 120 W/cm non focalized medium pressure mercury vapor lamp at 2 x 10 m/min.

The samples were tested for coating aspect, transparency (haze), water contact angle (before and after 200 ADR - acetone double rubs), marker resistance and fingerprint removability. The results obtained are presented in Table 2 below.

**Table 1 (in grams):**

| | Ex1R | Ex2R | Ex3R | Ex4R | Ex5R | Ex6R | Ex7R | Ex1 | Ex2 | Ex3 |
|---|---|---|---|---|---|---|---|---|---|---|
| EBECRYL ®1290 | 18 | 18 | 17 | 16 | 18 | 17 | 16 | 18 | 17 | 16 |
| PETIA | 43 | 39 | 33 | 9 | 39 | 33 | 9 | 39 | 33 | 9 |
| EBECRYL® 145 | 15 | 15 | 15 | 13 | 15 | 15 | 13 | 15 | 15 | 13 |
| EBECRYL® 160 | 20 | 20 | 19 | 18 | 20 | 19 | 18 | 20 | 19 | 18 |
| ADDITOL® BPCK | 4 | 4 | 4 | 4 | 4 | 4 | 4 | 4 | 4 | 4 |
| SE-3R | | 4 | 12 | 40 | | | | | | |
| SE-2R | | | | | 4 | 12 | 40 | | | |
| SE-1 | | | | | | | | 4 | 12 | 40 |
| Fluorinated oligomer content (wt%) | 0 | 1 | 3 | 10 | 1 | 3 | 10 | 1 | 3 | 10 |
| Viscosity (25°C, mPa.s) | 420 | 445 | 475 | 620 | 470 | 475 | 805 | 500 | 650 | 1050 |
| Formulation aspect | clear | hazy | hazy | hazy | hazy | hazy | clear | slightly hazy | clear | clear |

**Table 2:**

| | Ex1R | Ex2R | Ex3R | Ex4R | Ex5R | Ex6R | Ex7R | Ex1 | Ex2 | Ex3 |
|---|---|---|---|---|---|---|---|---|---|---|
| Coating aspect | OK | Strong orange peel | Strong orange peel | OK | Orange peel | Orange peel | OK | Slight orange peel | OK | OK |
| Coating haze (% | 0.1 | 5.2 | 10.7 | 22.5 | 7.1 | 4.3 | 0.2 | 5.1 | 0.1 | 0.1 |
| Water contact angle (°) | 75.4 | NA | NA | NA | 106.2 | 105.9 | 102.6 | 105.2 | 104.9 | 102.2 |
| Water contact angle (°) After 200 ADR | 74.6 | NA | NA | NA | 105.6 | 105.3 | 101.9 | 103.4 | 102.5 | 101.2 |
| Hexadecane contact angle (°) | <10 | NA | NA | NA | 67.4 | 66.9 | 65.4 | 67.2 | 66.3 | 65.8 |
| Marker resistance | 5 | NA | NA | 1 | 1 | 1 | 1 | 1 | 1 | 1 |
| Fingerprint removability | x | NA | NA | O | O | O | O | O | O | O |

| | | | | | | | | | | |
|---|---|---|---|---|---|---|---|---|---|---|
| Coating compositions of the invention combine an excellent marker resistance and fingerprint removability with a reduced haze and improved film formation capacity. The above results demonstrate that the way of linking lactone and polyfluoroether units in the backbone of the water and oil repellent agent has an influence on both the additive/matrix compatibility and the coating transparency. We believe that this is caused by reducing the risk of urethane acrylates that do not bear any compatibilizing lactone function. | | | | | | | | | | |

## Claims

1. An active energy ray curable compound **(A)** comprising:
- at least one active energy ray curable group;
- at least one moiety **(a1)** comprising at least one portion:
-(C(₌O)CᵤH₂ᵤO)ₜ- Formula (1)
wherein u is an integer of from 2 to 5, and t is an integer of from 1 to 20;
- at least one fluorine-containing moiety **(a3);** and
- at least one further moiety **(a2)** present between moieties **(a1)** and **(a3).**

2. The compound of claim 1, wherein moieties **(a1), (a2)** and **(a3)** are linked to each other in such a way that there is at least one urethane bond between moieties **(a1)** and **(a3).**

3. The compound of any of the preceding claims, wherein moiety **(a2)** is a polyisocyanate moiety that connects with moieties **(a1)** and **(a3)** via a urethane bond.

4. The compound of any of the preceding claims, wherein moiety **(a3)** is a fluorinated alcohol-derived moiety, wherein the fluorinated alcohol preferably is selected from fluorinated oxetane alcohols, hydroxyl functional fluoroethylene-alkyl vinyl ethers, fluoroalkyl alcohols and/or fluorinated (poly)ether alcohols.

5. The compound of any of the preceding claims, wherein moiety **(a3)** comprises at least one portion represented by one or more of the Formulae (3) to (7):
-(CF₂CF₂O)p- Formula (3)
-(CF₂CF(CF₃)O)q-; Formula (4)
-(CF₂CF₂CF₂O)r- Formula (5)
-(CF₂O)s- Formula (6);
-(CkF2k+1)- Formula (7);
wherein k is an integer from 1 to 16, and each of p, q, r and s is an integer of from 1 to 100.

6. The compound of any of the preceding claims, wherein the active energy ray curable functional group is selected from: (meth)acryloyl groups, vinyl groups, allyl groups, thiol groups and/or epoxy groups.

7. The compound of any of the preceding claims, obtained from the reaction of:
- at least one fluorinated alcohol **(i),**
- at least one polyisocyanate **(ii),** and
- at least one (poly)lactone-modified compound **(iii)** containing at least one active energy ray curable group and essentially one reactive group capable to react with isocyanate groups.

8. The compound of claim 7, wherein compounds **(iii)** are represented by Formula (2):
CH2=CH(R)-C(=O)-O-(CₙH2ₙ-O)r-(C(=O)-C₅H₁₀)ₜ-H
wherein R= -H or -CH3, n is an integer of from 1 to 4, r is an integer of from 1 to 4,and t is an integer of from 1 to 10.

9. An active energy ray curable composition comprising, relative to the total weight of non-volatile parts of the composition, from 0,5 to 100% by weight of at least one compound **(A)** according to any of claims 1 to 8, and from 0 to 99,5% by weight of at least one active energy ray curable compound **(B).**

10. The composition of claim 9, comprising from 3 to 100% by weight of compounds **(A)** and from 0 to 97% by weight of compounds **(B).**

11. The composition of any of claims 9 to 10, comprising from 10 to 100% by weight compounds **(A)** and from 0 to 90% by weight of compounds **(B).**

12. The composition of any of claims 9 to 11, wherein compounds **(B)** are selected from: (poly)urethane (meth)acrylates, (poly)ester (meth)acrylates, (poly)ether (meth)acrylates, epoxy (meth)acrylates and/or (meth)acrylated (meth)acrylics.

13. The composition of any of claims 9 to 12, further comprising at least one compound **(C)** selected from silicone compounds and/or from fluorinated compounds different from **(A).**

14. A process of coating an article or a substrate, comprising the steps of applying to at least one surface of an article or a substrate a composition of any of claims 9 to 13, followed by curing.

15. The process of claim 14, wherein the haze of said coating after cure is at most 1.0 % and the thickness of said coating after cure is in the range of from 5 to 25 µm.

16. The process of claim 14 or 15, wherein the composition is applied via an application technique that imparts micro-nano structures to the coatings surface.

17. An article coated according to the process of any of claims 14 to 16, wherein the coated article is **characterized by** one or more of the following:
- a contact angle relative to water deposited on the coated surface of at least 95°, preferably at least 100°;
- a contact angle relative to n-hexadecane deposited on the coated surface of at least 60°, more preferably at least 62°, most preferably at least 65°.
